Europäisches Patentamt

European Patent Office

Office européen des brevets

(11) Publication number: **0 041 053**
**A1**

## (12) EUROPEAN PATENT APPLICATION

(21) Application number: **81830079.0**

(22) Date of filing: **21.05.81**

(51) Int. Cl.³: **C 04 B 31/40, B 01 J 2/12**

(30) Priority: **23.05.80 IT 4876680**
**24.02.81 IT 4787781**

(43) Date of publication of application: **02.12.81**
**Bulletin 81/48**

(84) Designated Contracting States: **AT BE DE FR GB NL**

(71) Applicant: **Pirotta, Riccardo, 28, Via A. Riboty, I-00195 Roma (IT)**

(72) Inventor: **Pirotta, Riccardo, 28, Via A. Riboty, I-00195 Roma (IT)**

(74) Representative: **Gervasi, Gemma et al, Studio Brevetti e Marchi NOTARBARTOLO & GERVASI 33, Viale Bianca Maria, I-20122 Milano (IT)**

(54) **Method for manufacturing heat insulating and soundproofing pebbles and balls.**

(57) This invention relates to a method for manufacturing pebbles or balls of varying diameter, constituted by a mixture of powders having heat insulating and soundproofing characteristics, which are either mixed or not mixed with inert powders, are bonded together by cement and are subjected to centrifugal action, the invention also relating to a machine for carrying out said method. The conversion of powdery materials into pebbles leads to considerable advantages, namely economical advantages due mainly to the possibility of dispensing with packaging into bags, as is indispensable in the case of powdery products, transportation thus being able to be carried out with bulk material, and technical advantages, which consist mainly in the possibility of selecting the size distribution of the pebbles for use in concrete used for casttings in the building industry, which require insulation, lightness and strenght characteristics.

# Method for manufacturing heat insulating and soundproofing pebbles and balls.

This invention relates to a method for manufacturing pebbles or balls of varying diameter, constituted by a mixture of powders or granules of heat insulating and soundproofing characteristics, which are either mixed or not mixed with inert powders, are bonded together by cement, including Portland cement, and subjected to centrifugal action, together with a machine for carrying out said method.

The main characteristic and object of the invention is to convert into pebbles or balls the powder or small granules deriving from mineral or vegetable materials having special insulating properties, such as mica, pumice, rockwool, asbestos, cellular concrete, sawdust, ground straw, rice or wheat husks, silica subjected to an expansion process (known commercially as Perlite), biotic mica subjected to an expansion process (known commercially as Vermiculite), tufa and vulcanic materials in general, granulated polystyrene, granulated rubber including that deriving from the demolition of used tyres, residues and slag deriving from the combustion of organic substances, ground plastics materials of any kind (including those deriving from the collection of urban refuse), cork in powder or granular form, corn cobs, stems and leaves of corn, subflowers and the like, suitably ground algae and reeds, fruit stones and peel, husks in general, grapeseeds and distillation residues, and other materials suitable for the purpose. The method consists substantially of preparing a mixture of powdery ingredients having special thermal, acoustic and lightness properties, in suitable proportions as specified hereinafter; throughly mixing said substances and subjecting them to centrifugal action by feeding them into a suitable machine shown on the accompanying drawings in which it is diagrammatically illustrated.

The method for manufacturing pebbles or balls is as follows: the batch is firstly prepared using the following basic quantities which have been found to be the most suitable, and generally lying within a cement: powdered material volume ratio of 1:30 to 1:35 using the following ingredients, by way of example only:

-- one part by volume of Portland cement

-- two parts by volume of inert powdered stone ground to a very fine 00 powder, or powdered hydrated lime

-- 30 parts by volume of powdered or granular mica (that known commercially as Vermiculite is excellent).

The aforesaid ingredients in these proportions are mixed together in the dry state, and the mixture is gradually fed into the cylinder, a sufficient quantity of water is sprayed therein in an atomised state in order to moisten the mixture. Dry pure cement is also sprayed in, and by virtue of the rotation this coats the periphery of the pebbles, to form a type of outer crust which contributes to increasing their compression strength, and also gives the pebble constructed in this manner a certain degree of waterproofing. If considered necessary, the waterproofing can be improved by adding suitable normally used additives, and also fireproofing products in the case of vegetable powders.

The component ingredients of the aforesaid mixture are given only by way of example, because many other heat insulating materials suitable for this purpose can be used, either as powders or as materials for bonding the mix to be converted into balls.

The proportions given can also vary according to the charac-

- 3 -

**0041053**

teristics and requirements of the raw materials used.In particular, the term "cement" refers to any cementing material, such as Portland cement, pozzuolana cement, refractory cement, aluminous cement, iron cement, plaster, bitumens, tars, synthetic resin cements and the like.

The inert powders possibly used as fillers in the mixture can for example be pozzuolana, lapillus, anhydrous calcium sulphate, raw chalk, powdered stone or marble, powdered granite, hydrated lime, powdered metals and the like.

The raw materials of powder form with heat insulating properties indicated heretofore are at the present time sold in bags, and in the building industry are either used in their dry state or agglomerated with cement materials to form light insulating castings. The conversion of these materials into pebbles or balls leads to considerable economical and technical advantages, of which the main ones are indicated hereinafter:

1 - The ability to deliver material in bulk rather than in bags as is necessary in the case of powders. The cost of the bags and the bag filling operation is therefore obviated.

2 - As a consequence, the material can be transported loose using tipping trucks:

3 - The facility for pumping upwards from tankers using compressed air, with consequent savings in the unloading operations and the raising of the material to a higher level.

4 - The possibility of particle size selection for the various types of concrete.

5 - Improved concrete mix yield. At the present time, one cubic metre of concrete requires on an average 1.3 cubic metres of powders.

6 - Use of the pebbles for hydroponic flower and garden cultures.

7 - Roof insulation by speading the pebbles dry, and then applying a cement grout for stabilising purposes.

8 - Replacing the polystyrene of sandwich panels with pebbles made from vegetable materials, so obviating the lethal polystyrene gas in the case of fire.

9 - A smaller quantity of water in the mixes and thus accelerated drying of the castings.

10 - Construction of prefabricated blocks for partitions of the like.

Further uses are not indicated because of their obvious nature.

It should however be noted that, especially in the case of pebbles of vegetable materials, large-dimension blocks can for example be constructed, and after curing can be sawn into slices of the required thickness, they then being incorpora ted into the thickness of any building casting for lightening and so sound and acoustic insulation purposes, as it at present done with other materials, and in particular with polystyrene.

Particularly interesting are some results achieved by using a sand or little grain obtained from grinding or crushing a cellular concrete as starting material in the process according to the invention.

It is known that the cellular concrete is a cement compound which lightness is due to the homogeneous distribution of little gas and/or air bubbles in the bulk. By changing the quantities of gas or air dispersed in the bulk, materials may be obtained having specific gravities from 300 to 1600 kg/$m^3$, and therefrom insulating, soundproofing, and strength characteristics varying within a large range.

Furthermore, concrete density may be varied also through the addition of powdered inerts chosen from those having lightness and insulating properties, such as pumice, lapillus, expanded clay, vermiculite, perlite, and others.

The foams used for enclosing air into the connective bulk may be of any type and quality, for example synthetic expanded resins.

Other cellular concretes are already available, for example those sold with the trade marks Foamcem, Murfoam, Escumo 75, Cellum, Isoltav, and the like.

In practice, the cellular concrete used as starting material in the process according to the invention is prepared by the following method:

a) a cement mud is prepared, if necessary with the adddition of inert substances, dispersing therein little air bubbles, from 20 to 80 microns;

b) after the cement prepared as above has setted, it will be crushed for obtaining sand or little grain having as characteristics closed alveolus formed from little air bubbles dispersed in the bulk.

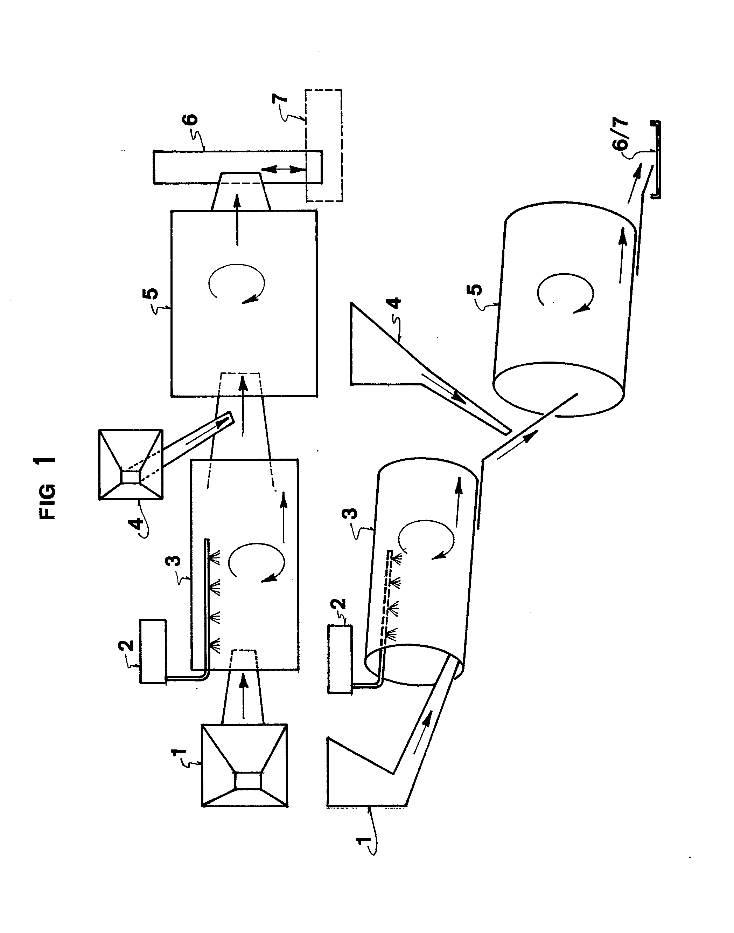

Then sand or little grain may be converted into pebbles. The centrifuging for producing the pebbles as described heretofore is done by using the machine shown diagrammatically in Figure 1, in which 1 is a container (silo) into which the mixed raw materials are fed in their dry state (see example), and are then fed into the cylinder 3 which is rotated with a rotational speed adjusted according to the quantity of mixture to be centrifuged.

The cylinder 3 comprises a pipe which, by way of various cocks, carries the water necessary for moistening the mixture which, by rolling under the influence of centrifugal force and by virtue of the inclination of the cylinder, begins to form balls and slides until it discharges into a hopper from which it is fed into the next cylinder 5 where, after being dusted with cement from the vessel 4, continues its centrifugal rolling and becomes wrapped with a subsequent layer of pure cement which completes the pebble by means of an outer resistant crust. A conveyor belt is disposed at the outlet of the cylinder 5 to discharge the pebbles on to screens for their selection and separation into the various particles sizes, they then being fed into store for curing. The pebbles are thus ready for use.

Some examples of specific mixtures are given hereinafter in order to further illustrate the subject matter of the invention, but without in any way limiting it.

EXAMPLE   1

Pebbles of various sizes, especially suitable for constructing strong, light road embankments with high heat insulating power, for clay or peat ground having a low load-bearing capacity, and subject to very low external temperature:

a)   Powdered Perlite
     density 90 kg/m$^3$ . 3 m$^3$ = 270 kg

b)   Powdered pumice
     density 900 kg/m$^3$ . 4 m$^3$ = 3,600 kg

c)   Cement binder
     density 1,600 kg/m$^3$ . 0.25 m$^3$= 400 kg

After mixing the said ingredients with a minimum quantity of water and drying, a mixed block is obtained having a volume of about 7.250 m$^3$ and a weight of about 4.720 kg, with a density of 589 kg/m$^3$.

If however the mixture is converted into pebbles according to the invention, there is an increase in volume (due to the voids between the pebbles) of 30%, thus giving an apparent density of about 413 kg/m$^3$.

The pebbles manufactured in this manner are used instead of common gravel, with the advantage of reducing the weight of the embankment (gravel density 1,600 kg/m$^3$ in comparison with 413 kg/m$^3$ for the new product).

The addition of pumice as an inert material makes the product considerably more economical.

Because of its hear insulation and lightness characteristics, the material obtained can be very widely used for road embankments for example in the Scandinavian countries.  If necessary, the pebbles can be waterproofed by adding a suitable waterproofing liquid to the mixing water used in the plant.

EXAMPLE   2

Pebbles of various sizes for heat and sound insulation.

a)   Expanded clay, particle size 1/3
     density 530 kg/m$^3$ 1 m$^3$ = 530 kg

b)   Powdered Perlite or Vermiculite
     density 90 kg/m$^3$ 2 m$^3$ = 180 kg

c)   Portland cement                           200 kg

After being mixed and dried, the aforesaid materials have a density of 330 kg/m$^3$. When converted into pebbles, these materials show a volume increase of 30%, and thus an apparent density of 231 kg/m$^3$.

As thermal conductivity is known to be also a function of the apparent density of a material, and is lower the lower the weight per unit  volume, the new material in pebble form has insulating characteristics which are much better than expanded clay alone.

Again, expanded clay has a $\lambda$ of 0.08, whereas Perlite or Vermiculite has a $\lambda$ of 0.04, and thus also for this reason the new material has a $\lambda$ which is much better than that of expanded clay, with the advantage of a weight per unit volume which is approximately halved.

EXAMPLE  3

Balls of vegetable materials bonded with cement or plaster. These balls are suitable for example for incorporation into plasterboard to form lightweight partition elements or air spaces in building.

a)   sawdust or other ground vegetable
     materials, possibly treated with
     fireproofing additives              100 parts by weight

b)   Portland cement, plaster or
     magnesite                           10  parts by weight The pebbles prepared with the said ingredients are incorporated into a plaster mix in quantity of up to 60% by volume to obtain castings having a weight less than the plaster mix alone, but with much better heat and sound insulation charcateristics.

EXAMPLE  4

Pebbles of various sizes, especially suitable for insulating intermediate floors.

a)   powdered Perlite
     density 90 kg/m$^3$                 1 m$^3$ = 90 kg

b)   granulated polystyrene
     density 60 kg/m$^3$      .          1 m$^3$ = 60 kg

c)   cement type 350.                          $0.20 \ m^3 = 300 \ kg$

After drying, the mixture obtained from the said materials has a density of 204 kg/m$^3$.

The same mixture when converted into pebbles according to the invention has an apparent density of 204 x 0.7 = 142.8 kg/m$^3$.

The pebble material obtained has a compression strength of about 120 kg/cm$^2$.

In addition to the stated insulation of floors, it is particularly useful for manufacturing blocks and slabs having a weight considerably less than the blocks at present available on the building market.

EXAMPLE   5

Insulating materials, = 0,08 obtained from cellular concrete

a)   sand or little grain of cellular
     concrete                              $1 \ m^3 = kg \ 300$

b)   Portland cement                       200 kg.

Density of the bulk : 500 kg/m$^3$

When processed by the described method, materials a) and b) are converted into pebbles with an apparent density of 315 kg/m$^3$.

EXAMPLE   6

Insulating material having a very high cohiben power is prepared from cellular concrete:

a)   sand or little grain of cellular
     concrete                              $1 \ m^3 = 300 \ kg$

b)   lapillus or pumice                    $1 \ m^3 = kg \ 800$

c)   pozzuolana cement                     kg 300

Density of the bulk :   700 kg/m$^3$

When converted into pebbles according to the invention, said materials have an apparent density of 490 kg/m$^3$.

## C l a i m s :

1. A light heat and/or sound insulating material in the form of pebbles or balls constituted from powder or granule materials with heat insulating and/or soundproofing charac teristics, which are possibly mixed with inert powders, are bonded with a cement and are enclosed in a hard cement crust.

2. A material as claimed in claim 1, wherein the powder or granule materials with heat insulating and/or soundproofing characteristics are chosen from the group consisting of mica, pumice, rockwool, cellular concrete, asbestos, sawdust, ground straw, rice and wheat husks, Perlite, Vermiculite, tufa, vulcanic materials, granulated polystyrene,granulated rubber, residues and slag deriving from the combustion of organic substances, ground plastics materials, cork, corn cobs, corn and soundflower stems and leaves, ground algae, ground reeds, fruit stones and peel, husks, grapeseeds and distilla tion residues.

3. A material as claimed in claim 1, wherein the cement is chosen from the group consisting of Portland cement, pozzuo lana cement, pumice, refractory cement, aluminous cement, iron cement, plaster, bitumens, tars and synthetic resin cements.

4. A material as claimed in claim 1, wherein the inert powders are chosen from the group consisting of pozzolana, lapillus, anhydrous calcium sulphate, raw chalk, powdered stone or marble, powdered granite, hydrated lime and powdered metals.

5. A material as claimed in claim 1, wherein the volume ratio of the cement to the powdered insulating material, possibly containing inert fillers, lies between 1:30 and 1:35.

6. A method for preparing light heat and/or sound insulating material in the form of pebbles or balls, characterised in the form of pebbles or balls, characterised in that a powdered or granular material with heat insulating and/or soundproofing characteristics, and possibly containing inert powders, is mixed in the dry state with a cement in a cement:powder volume ratio of between 1:30 and 1:35, the dry mixture thus prepared is moistened with water in a cylinder which rotates at a speed variable according to the material handled and is inclined such that the coherent pebbles and balls which form can slide into a second rotating cylinder in which they are dusted with cement and centrifuged until the complete formation of pebbles or balls surrounded by a hard cement crust.

7.  A method as claimed in claim 6, wherein the moistening wster contains suitable additives such as fireproofing substances.

8.  An apparatus for producing light heat and/or sound insulating material in the form of pebbles and balls, characterised by comprising a first rotating cylinder which is fed by a feeder containing the mixture in the form of powder and/or granules and into which a pipe opens for injecting atomised water, said first cylinder being inclined such as to convey the formed coherent pebbles into a second inclined rotating cylinder, in which a powdered cement feeder is disposed.

FIG 1

European Patent
Office

EUROPEAN SEARCH REPORT

0041053

Application number

EP 81 83 0079.0

## DOCUMENTS CONSIDERED TO·BE RELEVANT

| Category | Citation of document with indication, where appropriate, of relevant passages | Relevant to claim |
|---|---|---|
| X | DE – B2 – 2 243 118 (LOTZ)<br>* claims; column 2, lines 50 to 55 *<br>–– | 1-3 |
| | DE – A1 – 2 817 080 (SKW TROSTBERG)<br>* examples 1 and 15 *<br>& GB – A – 2 019 381<br>–– | 1-3 |
| | DE – A1 – 2 457 345 (HOME et al.)<br>* claims *<br>–– | 1-3 |
| | DE – A – 2 136 117 (ROBINSKY et al.)<br>* claims *<br>& GB – A – 1 336 229<br>–– | 1-3 |
| A | GB – A – 1 391 609 (FISONS LTD.)<br>* claims *<br>–– | 6,8 |
| A | DE – A1 – 2 505 119 (IHLEFELD)<br>* claims *<br>–––– | 6,8 |

**CLASSIFICATION OF THE APPLICATION (Int. Cl.3)**

C 04 B 31/40
B 01 J 2/12

**TECHNICAL FIELDS SEARCHED (Int. Cl.3)**

B 01 J 2/12
C 04 B 31/00
C 04 B 41/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X The present search report has been drawn up for all claims | |

| Place of search | Date of completion of the search | Examiner |
|---|---|---|
| Berlin | 03-08-1981 | HÖRNER |

EPO Form 1503.1  06.78